# FASCICULE DE BREVET EUROPEEN

(11) **EP 0 381 560 B1**
(45) Date de publication et mention de la délivrance du brevet: **10.03.1993**
(21) Numéro de dépôt: 90400221.9
(22) Date de dépôt: 25.01.1990
(51) Int. Cl.: B60G 15/07

(54) **Dispositif supérieur d'appui de suspension entre un ensemble ressort-amortisseur et le châssis d'un véhicule automobile**
Obere Aufhängungsstützvorrichtung zwischen einer Feder-Dämpfer-Einheit und dem Rahmen eines Kraftfahrzeuges
Upper suspension support device between a spring-damper unit and the chassis of a motor vehicle

(30) Priorité: 31.01.1989 FR 8901187
(43) Date de publication de la demande: 08.08.1990
(73) Titulaire: HUTCHINSON, F-75008 Paris (FR)
(72) Inventeur: Cothenet, Didier, F-28800 Bonneval (FR); Domer, Michel, F-60790 Valdampierre (FR)
(74) Mandataire: Picard, Jean-Claude Georges

(56) Documents cités:
- EP-A- 0 268 393
- DE-A- 2 613 982
- FR-A- 2 294 869
- FR-A- 2 563 302
- US-A- 4 248 454
- US-A- 4 260 177
- Patent Abstracts of Japan, vol. 7, No. 29 (M-191) (1174), 5 Fevrier 1983, page 35M191

## Description

La présente invention concerne un dispositif supérieur d'appui de suspension entre un ensemble ressort-amortisseur et le châssis d'un véhicule automobile, destiné en particulier aux trains de roues directrices dans.une suspension de type Mac Pherson, du type comportant :
- une armature intérieure mobile à surface latérale de révolution, cette armature étant pourvue d'une part d'un appui et d'un moyen de fixation pour l'extrémité supérieure de l'amortisseur, d'autre part de premiers rebords de butée supérieur et inférieur pour la limitation de ses débattements verticaux ;
- une armature extérieure propre à être fixée sur la caisse du véhicule, et dont la face inférieure porte un garnissage d'appui pour le ressort de suspension, cette armature ayant en outre une surface latérale qui entoure celle de l'armature intérieure et qui se termine,' à ses parties supérieure et inférieure, par des seconds rebords de butée faisant face respectivement auxdits premiers rebords de butée supérieur et inférieur de l'armature intérieure ; et
- un revêtement de matériau élastique adhérisé, pour l'essentiel, sur la surface interne de ladite armature extérieure, entre celle-ci et la surface externe de ladite armature intérieure dont il est légèrement espacé, ce revêtement présentant :
   . un voile relativement peu épais constituant une attache souple reliant les deux dites armatures ;
   . une partie principale interposée entre ladite surface latérale de l'armature intérieure et ladite surface latérale de l'armature extérieure ; et
   . des talons de butée supérieur et inférieur interposés respectivement entre les premier et second rebords de butée supérieurs et entre les premier et second rebords de butée inférieurs desdites armatures,
- et dans lequel ladite armature intérieure est constituée de deux coupelles à rebords de butée, opposées par leurs fonds, ces fonds étant solidarisés l'un de l'autre par ledit moyen de fixation de l'extrémité supérieure de l'amortisseur.

Un tel dispositif est connu par le document US-A-4 260 177.

Le but de la présente invention est de perfectionner les dispositifs existants et en particulier d'obtenir, dans un dispositif du type susmentionné, les caractéristiques suivantes :
- le dispositif devra pouvoir constituer un appui du ressort de suspension, soit directement, soit par l'intermédiaire de son boîtier de pivotement à billes ;
- il devra constituer une attache souple, c'est-à-dire à faible rigidité, pour les faibles déplacements à moyenne et haute fréquence de la tige d'amortisseur dans les deux sens (compression ou extension), de même qu'en direction radiale ; le dispositif devra par ailleurs absorber les flexions de la tige d'amortisseur, lesquelles se traduisent par des déplacements coniques de son attache ;
- par contre, il devra présenter des butées pour limiter les déplacements de la tige dans ces deux sens de compression et d'extension, lors des chocs de la suspension à basse fréquence pouvant entraîner de forts déplacements (nids de poule, etc.) ; la rigidité du dispositif devra donc devenir très forte lorsque ces déplacements de la tige atteindront une valeur importante, prédéterminée.

Plus particulièrement, il est souhaitable de faire en sorte que pour les déplacements radiaux au-delà d'une certaine amplitude, la rigidité du dispositif soit faible ou moyenne dans une direction (qui sera la direction longitudinale du véhicule), ceci pour obtenir un bon filtrage, notamment des bruits de roulement, tandis que dans la direction perpendiculaire à la précédente (qui sera la direction transversale du véhicule) la rigidité soit relativement élevée pour assurer un bon guidage de la caisse, notamment en virage.

Enfin, pour permettre un réglage facile de toutes ces caractéristiques, les différentes rigidités du dispositif devront être bien découplées.

Le dispositif devra aussi être peu coûteux et facile à fabriquer et à monter ou démonter sur les véhicules.

Pour ce faire, un dispositif supérieur d'appui de suspension du type mentionné au début sera, conformément à la présente invention, essentiellement caractérisé en ce que ladite armature extérieure possède la forme générale d'une coupelle renversée dont le fond ouvert laisse passage à la coupelle supérieure de l'armature intérieure et dont la surface latérale présente sur les côtés des parties rentrées diminuant l'espace disponible sur les côtés entre lesdites surfaces latérales, par rapport à l'espace disponible entre ces surfaces à l'avant et à l'arrière.

Ces dispositions, et d'autres, ainsi que leurs avantages, seront mieux comprises à la lecture de la description qui va suivre de deux modes de réalisation d'un dispositif conforme à l'invention.

Dans le dessin ci-annexé :
- la figure 1 représente dans sa partie gauche une demi-coupe axiale du dispositif, supposé monté sur un véhicule, selon un plan longitudinal de ce dernier, et dans sa partie droite une demi-coupe axiale selon un plan transversal du véhicule. Cette partie droite montre également une variante de réalisation des moyens de fixation de l'armature extérieure sur le véhicule ;
- la figure 2 est une vue partielle en coupe selon la ligne II-II de la figure 1.

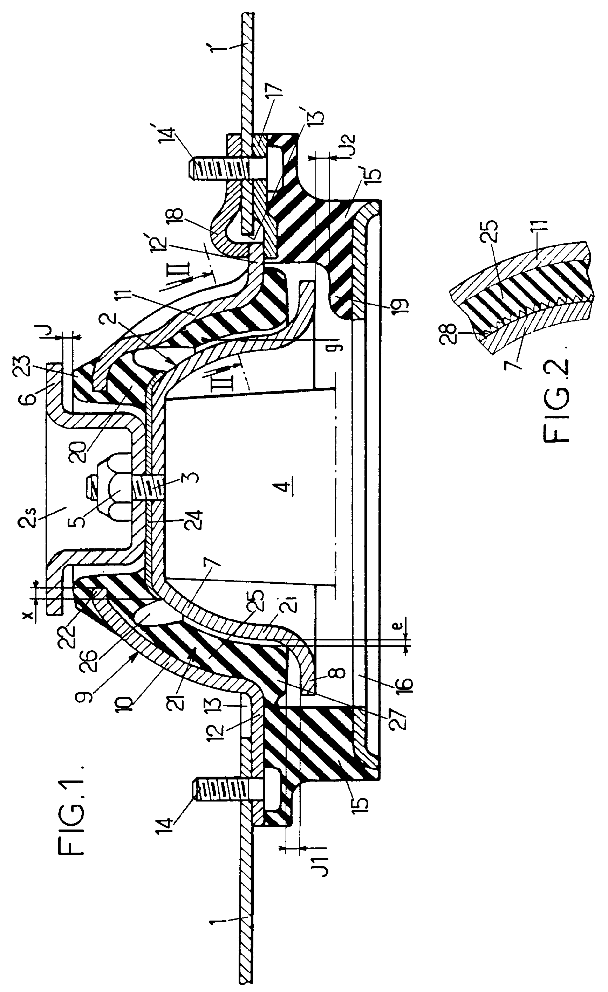

Sur la figure 1, la caisse du véhicule est schématisée par la tôle 1.

L'armature intérieure 2 du dispositif est constituée de deux coupelles opposées par leurs fonds, inférieure 2i et supérieure 2s, ces fonds étant traversés par une tige filetée 3 de fixation de l'amortisseur, dont la partie supérieure est schématisée en 4 ; le serrage des deux fonds l'un sur l'autre et l'assujettissement de l'amortisseur sont assurés par un boulon 5 vissé sur la tige 3, contenu par la coupelle supérieure 2s et qui est donc accessible par le haut. La partie supérieure 4 de l'amortisseur trouve donc appui sur le fond de la coupelle inférieure 2i.

La coupelle supérieure 2s possède une paroi latérale cylindrique terminée par un rebord de butée supérieur 6. La coupelle inférieure 2i possède une surface latérale de révolution 7, de forme bombée, terminée par un rebord de butée inférieur 8.

L'armature extérieure est référencée en 9 et présente la forme générale d'une coupelle le renversée, dont le fond est ouvert et laisse passage à ladite coupel le supérieure 2s de l'armature intérieure 2. La surface latérale 10 de l'armature 9 est bombée et entoure la surface latérale 7 de la coupelle inférieure 2i. A l'avant et à l'arrière ( par rapport au véhicule ), et comme le montre la moitié gauche de la figure 1, cette surface latérale 10 est de révolution ( approximativement sphérique), tandis que sur les côtés, comme visible sur la moitié droite de cette figure, cette surface présente des parties rentrées 11 diminuant l'espace disponible entre les surfaces latérales 7 et 10.

Les moitiés gauche et droite de la figure 1 montrent également deux modes d'exécution différents des moyens de fixation de l'armature extérieure 9 -- et donc de l'ensemble du dispositif -- sur la caisse 1 du véhicule.

Dans le mode de réalisation représenté sur la moitié gauche de cette figure, on voit que l'armature extérieure 9 comporte un rebord inférieur 12 faisant partiellement face au rebord de butée inférieur 8 de l'armature intérieure 2, et passant sous la tôle 1, par une ouverture 13 de cette dernière. Le rebord 12 peut être fixé à la tôle 1 par un système à vis 14 et écrou.

La tête de cette vis est noyée dans un garnissage d'élastomère 15 adhérisé sous le rebord 12 et sur un évidement inférieur duquel le ressort de suspension peut prendre appui, par l'intermédiaire d'une garniture métallique 16.

Avec un tel mode de réalisation, on comprend qu'en cas de nécessité de rechange de l'ensemble ressort-amortisseur, le dispositif ne pourra être démonté que par le dessous du véhicule.

Dans le mode de réalisation représenté sur la moitié droite de cette figure, on a utilisé les mêmes références que dans la moitié gauche, avec l'indice "prime", pour représenter les éléments analogues.

On voit que le rebord 12′ est moins large que le rebord 12, et est de diamètre moindre que celui du trou de passage 13′ de la tôle 1′. Ceci étant, on voit que ce rebord 12′ peut être cependant retenu sur la tôle 1′ en étant enserré -- par un système à vis 14′ et écrou --entre deux montures métalliques débordant intérieurement sur le trou 13′, à savoir une monture 17 sur laquelle le garnissage d'élastomère 15′ est adhérisé, et une monture de pincement extérieure ou couvercle 18.

Ainsi, on conçoit qu'après enlèvement de l'écrou (non représenté), fixé sur la vis 14′, et après enlèvement de l'écrou 5, on pourra enlever par le haut l'ensemble du dispositif, et avoir de la sorte accès aux organes internes de l'amortisseur, par exemple pour les changer (possibilité d'utilisation d'un système à cartouche). Il va de soi que pendant ces opérations le garnissage 15′ restera en place, du fait de la pression exercée par le ressort de suspension sur la garniture 16.

En observant cette moitié droite de la figure 1, on remarque aussi que le garnissage 15′ possède dans ce cas un talon de butée 19. Lors du premier montage de l'ensemble de suspension, le ressort est comprimé et exerce donc une pression sur la garniture 16. Du fait de l'absence du couvercle 18 à ce moment, cette pression pourrait soumettre à une tension excessive l'attache souple rotulante 20 en matériau élastique qui, à leur partie supérieure, relie la coupelle inférieure 2i de l'armature intérieure 2 et l'armature extérieure 9. Cet inconvénient est alors évité par mise en butée dudit talon 19 sous le rebord de butée 8 de cette même coupelle inférieure 2i. Au repos existe entre les deux un jeu qui est référencé J2.

L'attache rotulante 20 qui vient d'être mentionnée fait partie intégrante d'un revêtement épais en matériau élastique (tel qu'un élastomère), référencé globalement en 21, adhérisé sur l'armature extérieure 9, et qui assure les différentes fonctions élastiques énumérées au début. Le revêtement 21 est moulé d'une pièce avec le garnissage 15 dans le mode de réalisation de la moitié gauche de la figure 1, mais le moulage s'effectue bien entendu en deux parties (21 et 15′) dans le mode de réalisation de la moitié droite de cette figure.

A sa partie supérieure, ce revêtement 21 recouvre un rebord de butée supérieur 22 de l'armature extérieure 9, rebord qui fait face au rebord de butée supérieur 6 de l'armature intérieure 2. Une butée de détente 23 est ainsi constituée entre les deux susdits rebords 6 et 22, qui empêchera une détente excessive du système ressort-amortisseur par exemple après une compression de grande amplitude. Il est à noter que le jeu référencé J entre cette butée 23 et le rebord supérieur 6 doit bien entendu être inférieur au jeu J2 mentionné plus haut et que ce jeu J2 devra en outre être assez grand pour permettre l'écrasement maximal de la butée 23.

Il est à noter également que la surface d'appui de cette butée 23 est légèrement conique, pour favoriser les déplacements en conique relatifs des parties mobiles du dispositif, par rapport aux parties fixes.

Ces déplacements relatifs en conique seront autorisés par l'attache souple rotulante 20 dont il a été question plus haut et qui fait suite, vers l'intérieur de l'armature 9, à la butée 23. Le bord inférieur de cette attache rotulante est adhérisé à la périphérie d'une plaquette intermédiaire 24 enserrée entre les fonds des coupelles inférieure 2i et supérieure 2s de l'armature intérieure 2. Le recouvrement x, vu en plan, entre le rebord supérieur 22 et la périphérie de la plaquette 24 est très faible et peut même être nul, ceci pour conférer à cette attache souple 10 la souplesse nécessaire vis-à-vis des faibles déplacements de la tige d'amortisseur à moyenne et haute fréquence dans les sens de compression et d'extension. On conçoit par ailleurs que grâce à cette attache 20, le dispositif peut absorber les flexions de la tige d'amortisseur, qui se traduisent par des déplacements coniques de son attache.

Pour ce qui est des déplacements radiaux relatifs entre les parties mobiles et les parties fixes du dispositif, ils seront limités par la partie principale 25 du revêtement épais 21, séparée de l'attache rotulante 20 par une gorge 26 et qui s'interpose entre les surfaces latérales 7 et 10, respectivement, des armatures intérieure 2 et extérieure 9. Compte tenu des nervures ou parties rentrées 11 que comporte la surface latérale 10 sur les côtés du dispositif, on voit que, comme requis, la rigidité de la butée, vis-à-vis des déplacements relatifs radiaux, sera plus grande dans la direction transversale du véhicule que dans sa direction longitudinale.

Enfin, la limitation de l'écrasement du système ressort-amortisseur est assurée par la partie inférieure du revêtement épais 21 qui constitue une butée d'écrasement 27 entre le rebord 12 (ou 12′) de l'armature extérieure 9 et le rebord de butée inférieur 8 de la coupelle inférieure 2i de l'armature intérieure. Le jeu entre la surface d'attaque de la butée 27 et ledit rebord 8 a été référencé J1.

Compte tenu des rayons de courbure des parois latérales 7 et 10, ce jeu J1 détermine un jeu radial minimum e avant la mise en butée sur cette partie 25. Ce jeu J1 reste cependant notablement inférieur à la garde g, correspondant à une possibilité de déplacement vertical important de la coupelle inférieure 2i par rapport à la partie 25 du revêtement 21, avant annulation du jeu J1 et même après écrasement de la butée 27.

Pour la même raison que ci-dessus, il est également à noter que la surface inférieure de cette butée 27 est légèrement conique.

Enfin, on a montré à la figure 2 que l'on peut prévoir des stries 28 sur la partie 25 du revêtement 21, pour éviter les chocs dans les débattements horizontaux.

## Revendications

1. Dispositif supérieur d'appui de suspension entre un ensemble ressort-amortisseur et le châssis d'un véhicule automobile, destiné en particulier aux trains de roues directrices dans une suspension de type Mac Pherson, du type comportant:
- une armature intérieure mobile (2) à surface latérale de révolution (7), cette armature (2) étant pourvue d'une part d'un appui et d'un moyen de fixation (3, 5) pour l'extrémité supérieure (4) de l'amortisseur, d'autre part de premiers rebords de butée supérieur (6) et inférieur (8) pour la limitation de ses débattement verticaux ;
- une armature extérieure (9) propre à être fixée sur la caisse (1) du véhicule, et dont la face inférieure porte un garnissage d'appui (15) pour le ressort de suspension, cette armature (9) ayant en outre une surface latérale (10) qui entoure celle de l'armature intérieure (2) et qui se termine, à ses parties supérieure et inférieure, par des seconds rebords de butée (22, 12) faisant face respectivement auxdits premiers rebords de butée supérieur (6) et inférieur (8) de l'armature intérieure ; et
- un revêtement (21) de matériau élastique adhérisé, pour l'essentiel, sur la surface interne de ladite armature extérieure (9), entre celle-ci et la surface externe de ladite armature intérieure (2) dont il est légèrement espacé, ce revêtement (21) présentant :
. un voile relativement peu épais constituant une attache souple (20) reliant les deux dites armatures;
. une partie principale (25) interposée entre ladite surface latérale (7) de l'armature intérieure (2) et ladite surface latérale (10) de l'armature extérieure (9) ; et
. des talons de butée supérieur (23) et inférieur (27) interposés respectivement entre les premier et second rebords de butée supérieurs (6, 22) et entre les premier et second rebords de butée inférieurs (8, 12) desdites armatures,
- et dans lequel ladite armature intérieure (2) est constituée de deux coupelles (2i, 2s) à rebords de butée (8, 6), opposées par leurs fonds, ces fonds étant solidarisés l'un de l'autre par ledit moyen de fixation (3, 5) de l'extrémité supérieure (4) de l'amortisseur,
caractérisé en ce que ladite armature extérieure (9) possède la forme générale d'une coupelle renversée dont le fond ouvert laisse passage à la coupelle supérieure (2s) de l'armature intérieure (2) et dont la surface latérale (10) présente sur les côtés des parties rentrées (11) diminuant l'espace disponible sur les côtés entre lesdites surfaces latérales (7, 10), par rapport à l'espace disponible entre ces surfaces à l'avant et à l'arrière.

2. Dispositif selon la revendication 1, caractérisé en ce que ledit second rebord de butée inférieur (12′) de l'armature extérieure (9) possède une dimension radiale inférieure à celle d'un trou (13′) de la caisse (1′) du véhicule, et est maintenu sur ladite caisse par recouvrement d'un couvercle amovible (18), lequel est démontable par le haut.

3. Dispositif selon la revendication 2, caractérisé en ce que ledit garnissage d'appui (15) possède un talon de butée (19) faisant face, par le dessous, audit premier rebord inférieur (8) de l'armature intérieure (2), un jeu (J2) étant ménagé entre les deux au repos.

4. Dispositif selon l'une quelconque des revendications précédentes, caractérisé en ce que ledit voile relativement peu épais (20) est, à sa partie inférieure adhérisé à la périphérie d'une plaquette intermédiaire (24) enserrée entre les fonds desdites coupelles supérieure et inférieure (2s, 2i).

5. Dispositif selon la revendication 3 ou 4, caractérisé en ce que ledit jeu (J2) entre le talon de butée (19) et ledit premier rebord inférieur (8) de l'armature intérieure (2) est sensiblement supérieur au jeu (J) ménagé entre ledit premier rebord supérieur (6) de cette armature et ledit talon de butée supérieur (23) de l'armature extérieure (9).

6. Dispositif selon l'une quelconque des revendications précédentes, caractérisé en ce que le jeu (J1) ménagé entre le premier rebord de butée inférieur (8) de l'armature intérieure (2) et le talon de butée inférieur (27) dudit revêtement (21) est sensiblement inférieur à la garde (g), mesurée verticalement, entre la surface latérale (7) de cette armature et la partie principale (25) dudit revêtement.

7. Dispositif selon l'une quelconque des revendications précédentes, caractérisé en ce que ladite partie principale (25) du revêtement (21) porte des stries (28) empêchant les chocs lors des déplacements relatifs horizontaux entre les armatures intérieure (2) et extérieure (9).

## Patentansprüche

1. Obere Aufhängungsstützvorrichtung zwischen einer Feder-Dämpfer-Einheit und dem Rahmen eines Kraftfahrzeuges, insbesondere für den lenkbaren Radsatz mit Mac Pherson-Aufhängung bestehend aus folgenden Teilen:
- einer inneren beweglichen Armatur (2) mit einer seitlichen Umdrehungsoberfläche (7), die einerseits mit einer Abstützung und einem Befestigungsmittel (3, 5) für das obere Ende (4) des Dämpfers und andererseits mit einem ersten oberen Anschlagrand (6) und einem ersten unteren Anschlagrand (8) zur Begrenzung ihrer senkrechten Schwingungen versehen ist,
- einer äußeren Armatur (9), die an den Rahmen des Fahrzeuges anbringbar ist und deren untere Oberfläche mit einem Stützfutter (15) für die Aufhängungsfeder versehen ist, wobei die Armatur (9) ferner eine seitliche Oberfläche (10) hat, die die Oberfläche der inneren Armatur (2) umgibt und an ihrem oberen und unteren Ende in zweite Anschlagränder (22, 12) übergeht, die den ersten oberen und unteren Anschlagrändern (6, 8) der inneren Armatur gegenüberliegen und
- einer Beschichtung (21) aus elastischem Material, die hauptsächlich an der inneren Oberfläche der äußeren Armatur (9) zwischen dieser und der äußeren Oberfläche der inneren Armatur (2) angebracht ist, von der sie in einem geringen Abstand verläuft, wobei die Beschichtung (21) folgende Merkmale aufweist:
- einen Randabschnitt (20) mit relativ geringer Stärke, der eine nachgiebige Halterung bildet, die die beiden Armaturen verbindet,
- einen Hauptabschnitt (25), der zwischen der seitlichen Oberfläche (7) der inneren Armatur (2) und der seitlichen Oberfläche (10) der äußeren Armatur (9) liegt und
- einen oberen Anschlagansatz (23) und einen unteren Stauchanschlag (27), die zwischen den ersten und den zweiten oberen Anschlagrändern (6, 22) bzw. den ersten und den zweiten unteren Anschlagrändern (8, 12) der Armaturen eingesetzt sind,
- und bei der die innere Armatur (2) aus zwei Schalen (2i, 2s) mit Anschlagrändern (8, 6) besteht, wobei sich die Böden der Schalen gegenüberliegen und miteinander durch die Befestigungsmittel (3, 5) für das obere Ende des Dämpfers verbunden sind,
dadurch gekennzeichnet, daß die äußere Armatur (9) die allgemeine Form einer umgekehrten Schale besitzt, deren offener Boden einen Durchgang für die obere Schale (2s) der inneren Armatur (2) freiläßt und deren Mantelfläche (10) an den Seiten eingezogene Abschnitte (11) aufweist, die den an den Seiten zwischen den Mantelflächen (7, 10) verfügbaren Raum in bezug auf den Raum verringern, der vorn und hinten zwischen den Oberflächen verfügbar ist.

2. Vorrichtung nach Anspruch 1, dadurch gekennzeichnet, daß der zweite untere Anschlagrand (12′) der äußeren Armatur (9) in radialer Richtung eine Abmessung aufweist, die kleiner ist als die eines Loches (13′) im Rahmen (1′) des Fahrzeuges und an dem Rahmen durch eine abnehmbare übergreifende Abdeckung (18) gehalten wird, die nach oben abnehmbar ist.

3. Vorrichtung nach Anspruch 2, dadurch gekennzeichnet, daß das Stützfutter (15) einen Anschlagansatz (19) aufweist, der von unten dem ersten unteren Anschlagrand (8) der inneren Armatur (2) gegenüberliegt, wobei zwischen den beiden Teilen im Ruhezustand ein Spiel (J2) belassen wird.

4. Vorrichtung nach einem der vorhergehenden Ansprüche, dadurch gekennzeichnet, daß der Randabschnitt (20) mit relativ geringer Stärke an seinem unteren Teil mit dem Umfang einer Zwischenplatte (24) verbunden ist, die zwischen den Böden der oberen und der unteren Schale (2s, 2i) eingespannt ist.

5. Vorrichtung nach Anspruch 3 oder 4, dadurch gekennzeichnet, daß das Spiel (J2) zwischen dem Anschlagansatz (19) und dem ersten unteren Anschlagrand (8) der inneren Armatur (2) deutlich oberhalb des Spiels (J) zwischen dem ersten oberen Anschlagrand (6) der Armatur und dem oberen Anschlagansatz (23) der äußeren Armatur (9) liegt.

6. Vorrichtung nach einem der vorhergehenden Ansprüche, dadurch gekennzeichnet, daß das Spiel (J1) zwischen dem ersten unteren Anschlagrand (8) der inneren Armatur (2) und dem unteren Stauchanschlag (27) der Beschichtung (21) deutlich unterhalb des Abstandes (g) liegt, der in senkrechter Richtung gemessen zwischen der Mantelfläche (7) dieser Armatur und dem Hauptabschnitt (25) der Beschichtung besteht.

7. Vorrichtung nach einem der vorhergehenden Ansprüche, dadurch gekennzeichnet, daß der Hauptabschnitt (25) der Beschichtung (21) Rillen (28) enthält, die Stöße bei entsprechenden horizontalen Verschiebungen zwischen der inneren Armatur (2) und der äußeren Armatur (9) abfangen.

## Claims

1. Upper suspension support device between a spring-damper unit and the chassis of a motor vehicle, intended in particular for front axles in a MacPherson-type suspension, of the type having:
- a movable inner frame (2) with a lateral surface generated by revolution (7), this frame (2) being provided on the one hand with a support and a fixing means (3, 5) for the top end (4) of the damper, and on the other hand with first top (6) and bottom (8) stop flanges for limiting its vertical movements;
- an outer frame (9) which is suitable for being fixed to the vehicle body (1) and the upper face of which carries a support packing (15) for the suspension spring, this frame (9) also having a lateral surface (10) which surrounds the surface of the inner frame (2) and which terminates, at its upper and lower parts, in second stop flanges (22, 12) facing respectively these said first top (6) and bottom (8) stop flanges on the inner frame; and
- a covering (21) of elastic material bonded mainly onto the internal surface of the said outer frame (9), between the latter and the external surface of the said inner frame (2), from which it is slightly separated, this covering (21) having:
. a relatively thin sheet constituting a flexible connection (20) connecting the said two frames;
. a main part (25) interposed between the said lateral surface (7) of the inner frame (2) and the said lateral surface (10) of the outer frame (9); and
. top (23) and bottom (27) stop lugs interposed respectively between the first and second top stop flanges (6, 22) and between the first and second bottom stop flanges (8, 12) on the said frames,
- and in which the said inner frame (2) consists of two dishes (2i, 2s) with stop flanges (8, 6), with their bases opposite each other, these bases being secured to each other by the said means of fixing (3, 5) the top end (4) of the damper, characterised in that the said outer frame (9) has the overall shape of an upside-down dish, the open bottom of which allows passage to the top dish (2s) of the inner frame (2) and the lateral surface (10) of which has, on the sides, indented parts (11) decreasing the space available on the sides between the said lateral surfaces (7, 10), compared with the space available between these surfaces to the front and rear.

2. Device according to Claim 1, characterised in that the said bottom stop flange (12′) of the outer frame (9) has a radial dimension less than that of a hole (13′) in the vehicle body (1′), and is held on the said body by the overlap of a removable cover (18), which can be removed from above.

3. Device according to Claim 2, characterised in that the said bearing packing (15) has a stop lug (19) facing, from underneath, the said first bottom flange (8) of the inner frame (2), a clearance (J2) being provided between the two at rest.

4. Device according to any one of the preceding claims, characterised in that the said relatively thin sheet (20) is, at its bottom, bonded to the periphery of an intermediate plate (24) gripped between the bases of the said top and bottom dishes (2s, 2i).

5. Device according to Claim 3 or 4, characterised in that the said clearance (J2) between the stop lug (19) and the said first bottom flange (8) of the inner frame (2) is substantially greater than the clearance (J) provided between the said top flange (6) of this frame and the said top stop lug (23) of the outer frame (9).

6. Device according to any one of the preceding claims, characterised in that the clearance (J1) provided between the first bottom stop flange (8) of the inner frame (2) and the bottom stop lug (27) of the said covering (21) is substantially less than the clearance (g), measured vertically, between the lateral surface (7) of this frame and the main part (25) of the said covering.

7. Device according to any one of the preceding claims, characterised in that the said main part (25) of the covering (21) bears serrations (28) preventing impacts during horizontal relative movements between the inner (2) and outer (9) frames.
